# EUROPÄISCHE PATENTSCHRIFT

(11) **EP 3 521 131 B1**
(45) Veröffentlichungstag und Bekanntmachung des Hinweises auf die Patenterteilung: **10.03.2021**
(21) Anmeldenummer: 19154119.2
(22) Anmeldetag: 29.01.2019
(51) Int. Cl.: B61L 1/16, G01V 3/10

(54) **SENSOR, SYSTEM UND VERFAHREN ZUM ERFASSEN VON METALLTEILEN**
SENSOR, SYSTEM AND METHOD FOR DETECTING METAL PARTS
SENSEUR, SYSTÈME ET PROCÉDÉ POUR DÉTECTER DES PIÈCES MÉTALLIQUES

(30) Priorität: 06.02.2018 DE 102018102611
(43) Veröffentlichungstag der Anmeldung: 07.08.2019
(73) Patentinhaber: Pintsch GmbH, 46537 Dinslaken (DE)
(72) Erfinder: Wiengarten, Ralf, 45289 Essen (DE)
(74) Vertreter: Rupprecht, Kay

(56) Entgegenhaltungen:
- EP-A2- 1 479 587
- WO-A1-2017/041855
- DE-A1- 19 959 233

## Beschreibung

Die vorliegende Erfindung betrifft einen Sensor, ein System und ein Verfahren zum Erfassen von Metallteilen, insbesondere von metallischen oder teilmetallischen Rädern von Schienenfahrzeugen. Weiterhin betrifft die Erfindung ein computerlesbares Speichermedium mit Instruktionen zum Ausführen des Verfahrens.

Allgemein werden Einrichtungen zum Erfassen von Metallteilen, insbesondere zum Erfassen von metallischen oder teilmetallischen Rädern von Schienenfahrzeugen mit Hilfe von induktiven Sensoren realisiert. Hierbei ist ein Höchstmaß an Sicherheit erforderlich, trotz nur sporadischer Anwendung. Ein Beispiel für einen derartigen Anwendungsbereich ist der Eisenbahnverkehr. Im Folgenden wird auf die Verwendung derartiger Sensoren bzw. eines derartigen Systems oder eines derartigen Verfahrens im Eisenbahnverkehr Bezug genommen. Damit ist allerdings keine Einschränkung auf diesen Anwendungsbereich verbunden.

Im Bereich des Eisenbahnverkehrs sind meist zwei unabhängige Einzelsensoren in einem gemeinsamen Gehäuse in Schienenlängsrichtung hintereinander angeordnet. Diese Sensoren stellen mit hoher Verfügbarkeit Signale bereit, die üblicherweise über ein Kabel in eine Innenanlage geleitet und dort entsprechend verarbeitet werden. Hierdurch können Funktionen wie beispielsweise die Anwesenheitsmeldung eines Schienenfahrzeugs, die Fahrtrichtungserkennung oder eine Gleisfreimeldung in Form einer Achsenzählung realisiert werden.

Es ist üblich, dass jeder Sensor aus einer Sensorspule mit oder ohne hochpermeablen Kern und einer Oszillatorschaltung besteht. Die Sensorspule bildet mit einem Kondensator einen Schwingkreis und baut ein Wechselmagnetfeld in ihrer Umgebung auf. Ein in den Wirkbereich der Sensorspule eidringender metallischer Teil eines Eisenbahnrades dämpft den Schwingkreis, da diesem durch das Eisen des Eisenbahnrades Energie durch Wirbelstromverluste entzogen wird. Dies hat zur Folge, dass sich die Spannungsamplitude bzw. die Spannungsfrequenz des Schwingkreises ändert, was in eine Änderung der Stromaufnahme des Sensors umgewandelt wird. Dieses Messsignal wird über eine Zweidrahtleitung in die Innenanlage einer Sicherungsanlage geleitet und dort verarbeitet oder zur Verarbeitung aufbereitet.

Die Montageposition des Sensors wird durch die Geometrie der Schiene, bzw. durch das Eisenbahnrad in engen Grenzen vorbestimmt. So wird im bekannten Stand der Technik der Spurkranz der Räder erfasst, da hierfür der Radsensor auf ca. 40-50 mm unter der Schienenoberkante an einer sehr geschützten Stelle im Gleisbereich angeordnet werden kann. In dieser Montageposition ist es unvermeidbar, dass sich mindestens der Schienenkopf teilweise im Wirkbereich des Sensormagnetfeldes befindet. Es ist für eine zuverlässige Funktion des Sensors entscheidend, dass sich der Wirkbereich des Magnetfeldes besonders entlang der seitlichen, vertikalen Fläche des Schienenkopfes ausbildet. In der beschriebenen Montageposition wirkt das Eisen des Schienenkopfes dämpfend auf den Sensor ein. Dies muss in der Sensorschaltung berücksichtigt werden, beispielsweise in Form eines Vorabgleichs der Empfindlichkeit des Sensors. Dadurch wird der Sensor erst dann ausreichend empfindlich, wenn er sich in Bezug auf die Schiene an der vorberechneten Position befindet und der Schienenkopf als teildämpfendes Element wirkt.

Eine Möglichkeit des Vorabgleichs wird beispielsweise in der EP 1 479 587 A2 beschrieben, wobei hier verschiedene passive Elemente wie ohmsche Widerstände oder Kondensatoren mittels galvanischer Verbindung an die Schwingkreisspule an- bzw. abgeschaltet werden, um den Erfassungsbereich des dortigen Zählpunktes zu vergrößern oder zu verkleinern.

Es hat sich als Nachteil bei dieser Lösung herausgestellt, dass die galvanische Verbindung der Schwingkreisspule mit den Widerständen, Kondensatoren und den Halbleiterschaltern dieser feste elektrische Potentiale aufzwingt, die sowohl die elektrischen Designmöglichkeiten einschränken, als auch nachteilig im Hinblick auf die elektromagnetische Verträglichkeit (EMV) sind.

Auch hat es sich als nachteilig gezeigt, dass für den eigentlichen regulären Betrieb nicht benötigte Schaltungen durchgehend mit Energie versorgt werden, was sowohl für die Lebensdauer der Schaltungen, als auch für die Energiebilanz nachteilig ist.

Ein weiterer prinzipieller Nachteil des bekannten Sensors besteht darin, dass die Bauteile beispielsweise der induktiven Sensoren dem Einfluss der momentanen Betriebs- bzw. Außentemperatur unterliegen. Dadurch ist es unter Umständen notwendig, dass bereits montierte Sensoren aufwendig manuell überprüft und ggfs. nachjustiert werden müssen.

Es ist folglich die Aufgabe der Erfindung, die aus dem Stand der Technik bekannten Nachteile zu beseitigen oder zumindest zu minimieren.

Diese Aufgabe wird erfindungsgemäß durch einen Sensor nach Anspruch 1 gelöst. Demnach ist ein Sensor zum Erfassen von Metallteilen, insbesondere von metallischen oder teilmetallischen Rädern von Schienenfahrzeugen vorgesehen, mit einem elektrischen Schwingkreis, der mindestens eine Sensorspule, welche ein magnetisches Feld erzeugt, und mindestens eine Sensorkapazität aufweist, wobei der elektrische Schwingkreis eine Güte aufweist, und der Sensor eine einstellbare, vorzugsweise digitale Impedanz umfasst, welche magnetisch in dem elektrischen Schwingkreis eingekoppelt ist, wodurch die Güte des elektrischen Schwingkreises einstellbar ist, wobei durch Einstellen der Güte des elektrischen Schwingkreises der Erfassungsbereich für Metallteile veränderbar ist, und wobei eine Gleichspannung und/oder ein Gleichstrom des elektrischen Schwingkreises ein Erfassen von Metallteilen signalisiert.

Der erfindungsgemäße Sensor bietet den Vorteil, dass mittels der magnetischen Einkopplung der einstellbaren Impedanz in den elektrischen Schwingkreis die Güte dieses Schwingkreises veränderbar ist, wodurch der Erfassungsbereich für Metallteile geändert werden kann. Hierdurch wird der gesamte Sensor robuster gegenüber elektromagnetischen Störungen, da der Schwingkreis nur hochimpedant bzw. magnetisch gekoppelt mit den weiteren Schaltungsteilen verbunden ist. Dies ermöglicht beispielsweise auch, dass mehrere elektrische Potentiale verwendet werden, da statische Potentiale durch die magnetische Kopplung der Sensorspule des elektrischen Schwingkreises und der einstellbaren Impedanz getrennt sind.

Ein weiterer Vorteil besteht darin, dass durch die Änderung der Güte des elektrischen Schwingkreises und folglich der Änderung des Erfassungsbereichs für Metallteile die Impedanz des Sensors, bezogen auf eine Zuleitung, geändert wird. Hierdurch wird der Schaltungsaufbau des Sensors vereinfacht, was ebenfalls die Robustheit gegenüber elektromagnetischen Störungen erhöht und die Fehlerrate durch Bauteilfehler über die Lebenszeit der Bauteile reduziert.

Vorzugsweise ist die Impedanz mittels einer Koppelspule in den elektrischen Schwingkreis eingekoppelt. Hierdurch wird, unter Verwendung eines im Stand der Technik bekannten Bauteils der Vorteil erzielt, dass aufgrund der Trennung statischer Potentiale mehrere unterschiedliche elektrische Potentiale verwendbar sind.

Vorzugsweise ist die Impedanz parallel und/oder seriell zur Koppelspule geschaltet. Hierdurch wird ein möglicher parasitärer Effekt der Impedanz, wie beispielsweise eine parasitäre Induktivität, welche mit dem elektrischen Schwingkreis wechselwirken könnte, verhindert oder zumindest minimiert.

In funktioneller Hinsicht hat es sich als vorteilhaft erwiesen, dass der Sensor in einem Gehäuse verbaut ist, wobei das magnetische Feld der Sensorspule derart dimensioniert ist, dass es aus dem Gehäuse hinausgeht. Ein Vorteil hierbei ist, dass der Sensor vor Umwelteinflüssen, wie beispielsweise Regen, Schnee, oder direkter Sonneneinstrahlung, geschützt wird. Auch ist es hierdurch möglich, dass die Betriebstemperatur des Sensors zumindest in bestimmten Bereichen konstant bzw. möglichst wenig variabel gehalten wird.

Auch wird die Aufgabe erfindungsgemäß durch ein System zum Erfassen von Metallteilen, insbesondere von metallischen oder teilmetallischen Rädern von Schienenfahrzeugen, nach Anspruch 5 gelöst, mit mindestens einem Sensor nach einem der vorangehenden Ausführungsformen der vorliegenden Erfindung, mindestens einer Regelungselektronik, und mindestens einer hochimpedanten Anbindungselektronik zur elektrischen Anbindung der Regelungselektronik an eine Zuleitung, vorzugsweise eine Zweidrahtleitung.

Durch das erfindungsgemäße System werden die Vorteile des Sensors erzielt. Zusätzlich wird durch die mindestens eine hochimpedante Anbindungselektronik sichergestellt, dass die Regelungselektronik mit der Zuleitung nur hochimpedant bzw. magnetisch gekoppelt ist. Hierdurch können mehrere elektrische Potentiale verwendet werden, da die statischen Potentiale von diesen getrennt sind.

Auch hat es sich als vorteilhaft erwiesen, dass ein auf die Zuleitung aufgeprägtes, hochfrequentes Signal, beispielsweise eine hochfrequente Wechselspannung, die Regelungselektronik mit elektrischer Energie versorgt, wobei das hochfrequente Signal vorzugsweise eine Frequenz größer als 100 KHz aufweist. Hierdurch wird eine Energieversorgung der Regelungselektronik realisiert, deren Frequenz von möglichen Frequenzen, welche den Sensor beeinflussen könnten, weit entfernt ist. Hierdurch wird die EMV weiter verbessert.

In einer weiteren Ausführungsform ist für die elektrische Energieversorgung mittels des auf der Zuleitung aufgeprägten hochfrequenten Signal ein Hochpassfilter vor der Regelungselektronik geschaltet, wobei dieser eine Grenzfrequenz größer als 100 KHz aufweist. Hierdurch wird sichergestellt, dass die elektrische Energieversorgung der Regelungselektronik nicht von anderen Signalen, wie beispielsweise von Messsignalen oder eventuell auftretenden parasitären Signalen, beeinflusst wird.

In einer weiteren vorteilhaften Ausführungsform weist das System einen Tiefpassfilter auf, welcher den Sensor gemäß einem der vorhergehenden Ausführungsformen des erfindungsgemäßen Sensors mit der Zuleitung verbindet, wobei der Tiefpassfilter eine Grenzfrequenz von 200 Hz bis 200 kHz, vorzugsweise von 200 Hz bis 50 kHz, besonders bevorzugt 500 Hz bis 2 kHz aufweist. Hierdurch wird die EMV weiter verbessert, da beispielsweise das hochfrequente Signal, welches auf der Zuleitung aufgeprägt ist und zur Energieversorgung der Regelungselektronik dient, durch den Tiefpassfilter vom eigentlichen Näherungssensor abgeblockt wird.

Es hat sich als vorteilhaft erwiesen, dass die Regelungselektronik mittels mindestens einer Signalleitung mit der Zuleitung verbunden ist, wobei die Signalleitung der Signalübertragung auf die Zuleitung dient, beispielsweise mit einer Schnittstelle über eine Frequenz-Modulation. Hierdurch wird eine im Stand der Technik bekannte Schnittstelle verwendet.

Vorteilhafterweise schaltet die Regelungselektronik für das Erfassen von Metallteilen nicht benötigte Bauteile der Regelungselektronik ab. Hierdurch ist es möglich, dass sowohl Energie gespart wird, als auch die verwendeten Bauteile geschont werden, was für die Lebenszeit dieser Bauteil positiv ist. So ist sichergestellt, dass es nicht zu einer Aktivierung der Regelungselektronik während des regulären Betriebs des Systems kommen kann. Auch im Falle eines Bauteilfehlers der Regelungselektronik, würde lediglich bei den nächsten turnusgemäßen Kontrollen des Systems ein Fehlverhalten auffallen. Aber ein Ausfall im regulären Betrieb ist jedoch nicht zu erwarten. Dies erhöht die Verfügbarkeit des Systems.

In einer weiteren Ausführungsform sind die abgeschalteten nicht benötigten Bauteile der Regelungselektronik durch das hochfrequente Signal einschaltbar. Hierdurch wird die Komplexität des Systems verringert. Auch werden mögliche Störeinflüsse, welche beispielsweise durch einen Schalter zum Einschalten der nicht benötigten Bauteile der Regelungselektronik benötigt werden würden, umgangen.

Vorteilhafterweise weist die Regelungselektronik eine Fernbedienungsfunktionalität und/oder ein Fernbedienungsmodul auf. Ein Vorteil dieser Ausführungsform besteht darin, dass sowohl die möglicherweise benötigten Anpassungen des Erfassungsbereichs für Metallteile, als auch Funktionstests des Systems nicht am Ort des Systems auf manuelle Weise durchgeführt werden müssen, sondern von einer zentralen Stelle aus geplant bzw. durchgeführt werden können. Ein derartiges Fernbedienungsmodul kann beispielsweise leitungsgebunden realisiert werden.

Vorzugsweise weist das Systems zwei Sensoren nach einem der vorangegangenen Ausführungsformen des erfindungsgemäßen Sensors auf, wobei durch diese die Bewegungsrichtung von detektierten Metallteilen und/oder die Anzahl der Metallteile feststellbar ist. Ein Vorteil dieser Ausführungsform besteht darin, dass, bezogen auf das Beispiel der Schienenfahrzeuge, eine Feststellung der Richtung des Schienenfahrzeugs ermöglicht wird und durch das Zählen der Räder des Schienenfahrzeugs, welche in einem Gleisabschnitt einfahren bzw. wieder hinausfahren, eine Gleisfreimeldung ermöglicht wird.

Die Aufgabe wird auch durch ein Verfahren zum Erfassen von Metallteilen, insbesondere von metallischen oder teilmetallischen Rädern von Schienenfahrzeugen, nach Anspruch 14 gelöst, aufweisend die folgenden Schritte. Bestimmen der Güte eines elektrischen Schwingkreises, Verändern der Güte durch magnetische Einkopplung einer einstellbaren, vorzugsweise digitalen Impedanz in den elektrischen Schwingkreis, wobei durch das Verändern der Güte des Erkennungsbereichs für Metallteile geändert wird, und Messen der Gleichspannung und/oder des Gleichstroms des elektrischen Schwingkreises, wobei die Gleichspannung und/oder der Gleichstrom ein Erfassen von Metallteilen signalisiert.

Das erfindungsgemäße Verfahren hat den Vorteil, dass die EMV verbessert wird und die Fehlerrate durch Bauteilfehler über die Lebenszeit reduziert wird. Vorteilhafterweise umfasst der Verfahrensschritt des Veränderns der Güte das Parallel- und/oder Seriell-Schalten der einstellbaren Impedanz zu einer Koppelspule. Hierdurch wird ein im Stand der Technik wohl bekanntes Bauteil verwendet, welches bezüglich der EMV wohlbekannt ist.

Vorzugsweise wird nach dem Verändern der Güte, wobei der Erkennungsbereich für Metallteile geändert wird, eine Regelungselektronik teilweise oder vollständig abgeschaltet. Ein Vorteil dieser Ausführungsform besteht darin, dass der Energieverbrauch der Regelungselektronik verringert wird. Auch werden eventuell auftretende Störsignale durch Bauteile der Regelungselektronik dadurch verhindert, dass diese Bauteile im Energiesparmodus sind und nicht betrieben werden. Ebenso wird die Verfügbarkeit erhöht und die Fehleranfälligkeit reduziert.

Vorzugsweise wird die Regelungselektronik zum Bestimmen der Güte und Verändern der Güte eingeschaltet. Hierdurch wird sichergestellt, dass die Regelungselektronik voll funktionsfähig ist, sollte der Verfahrensschritt des Bestimmens der Güte oder der Verfahrensschritt des Veränderns der Güte notwendig sein.

Ebenso wird die Aufgabe durch ein computerlesbares Speichermedium nach Anspruch 18 gelöst. Durch das erfindungsgemäße computerlesbare Speichermedium einschließlich computerausführbarer Anweisungen wird eine verbesserte informationstechnische Handhabung des erfindungsgemäßen Verfahrens bewirkt.

Nachfolgend wird die Erfindung mittels einer Abbildung näher erläutert, welche eine schematische Darstellung eines Ausführungsbeispiels zeigt.

In der nachfolgenden Beschreibung werden für gleiche und gleichwirkende Teile dieselben Bezugsziffern verwendet.

Insbesondere wird darauf hingewiesen, dass mit der vorliegenden Erfindung ein elektronischer Zählpunkt beschrieben wird, der der Detektion von Schienenfahrzeugrädern aus Eisen dient und dessen Detektionsbereich elektronisch einstellbar ist. Diese Einstellung erfolgt über eine magnetisch eingekoppelte Impedanz in das Schwingkreissystem, welches der Detektion der Schienenfahrzeugräder dient. Der zur Einstellung benötigte Mikrokontroller bezieht die für seine Aktivität benötigte elektrische Leistung aus einem hochfrequenten Signal, das der Gleichspannung, die der Raddetektionsinformationsübertragung dient, aufgeprägt wird. Durch einen derartigen Zählpunkt wird eine Einstellung des Schienenfahrzeuggraddetektionsbereichs, sowie eine große Varianz an Ruheströmen bzw. Ruhespannungen erzielt.

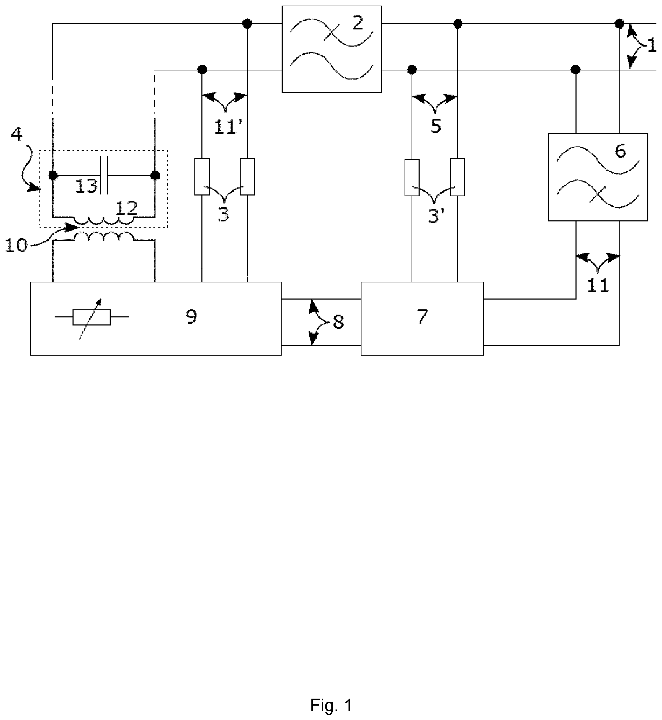

Die Abbildung zeigt eine Ausführungsform des Systems, wobei der elektrische Schwingkreis 4 eine Sensorspule 12 und eine Sensorkapazität 13 aufweist. Dieser Teil der Schaltung soll durch die zusätzliche Elektronik wenig beeinflusst werden. Dazu ist die verstellbare Impedanz 9 und die Regelungselektronik 7 derart ausgelegt, dass sie aus der Zuleitung 1 bei anliegender Gleichspannung jeweils vernachlässigbar wenig Energie aufnehmen. Dies wird unter anderem die Anbindungselektronik 3 und 3' bewerkstelligt. In der vorliegenden Ausführungsform sind diese aus Gründen der Übersichtlichkeit als Widerstände eingezeichnet, wobei dies symbolisch zu verstehen ist. Die Anbindungselektronik 3 bzw. 3' ist eine komplette Elektronik, die für eine hochimpedante Anbindung sorgt. Beispielsweise erscheint im niedrigen Frequenzbereich effektiv ein Widerstand von 1 KΩ bis 100 KΩ für Frequenzen unter 20 Hz bis 200 kHz, vorzugsweise 200 Hz bis 50 kHz, besonders bevorzugt 500 Hz bis 2 kHz. In der abgebildeten Ausführungsform erscheint ein effektiver Widerstand von 1 KΩ bis 100 KΩ für eine Frequenz von unter 1000 Hz, je nach Betriebszustand.

Die Eingangsseite des Tiefpassfilters 2 ist mit Zuleitungen 1 verbunden, welche gleichzeitig die Schnittstelle des Systems darstellen.

In der Ausführungsform wird ausgehend von einer Leitung der Zuleitung 1 eine Anbindung an den Hochpassfilter 6, sowie eine Anbindung an eine weitere Anbindungselektronik 3', welche mittels der Signalleitungen 5 mit der Regelungselektronik 7 verbunden ist, hergestellt. Die Regelungselektronik 7 wird durch die Energieversorgungsleitungen 11,11', welche vom Hochpassfilter 6 kommen, mit elektrischer Energie versorgt. Die Regelungselektronik 7 ist mittels Regelungsleitungen 8 mit einer verstellbaren Impedanz 9 verbunden. Die verstellbare Impedanz 9 ist mittels einer Koppelspule 14, welche beispielsweise parallel zur verstellbaren Impedanz 9 geschaltet ist, mit dem elektrischen Schwingkreis 4, insbesondere mit der Sensorspule 12 des elektrischen Schwingkreises 4, magnetisch gekoppelt.

Das System der Ausführungsform wird an bzw. unter oder neben eine Schiene (nicht abgebildet) montiert, um die metallischen oder teilmetallischen Räder von vorüberfahrenden Schienenfahrzeugen detektieren zu können. Ebenso ist es mit dem System möglich, dass Metallteile detektiert werden. Die Sensorspule 12 des elektrischen Schwingkreises 4 ist derart konstruiert, dass sie ein Magnetfeld aufspannt, das aus dem Gehäuse (nicht gezeigt) hinausragt. Ein genügend nah vorüberfahrendes metallisches Rad eines Schienenfahrzeuges, bzw. ein genügend nah vorbeibewegendes Metallteil verändert das Magnetfeld der Sensorspule 12. Hierdurch wird die Güte des elektrischen Schwingkreises 4 verändert, wobei dies elektrisch auswertbar ist und beispielsweise in großer Entfernung detektiert werden kann, vorzugsweise mittels einer Ferndetektionseinrichtung (nicht abgebildet). Auch ist es möglich, dass zwei baugleiche oder zumindest ähnliche elektrische Schwingkreise 4 vorgesehen sind (nicht abgebildet), wodurch die Feststellung der Richtung des metallischen Rades des Schienenfahrzeugs bzw. der Bewegungsrichtung des Metallteils ermöglicht wird. Hierauf aufbauend kann durch das Zählen der metallischen Räder des Schienenfahrzeuges, welche beispielsweise in einem Gleisabschnitt eingefahren bzw. hinausgefahren sind, eine Gleisfreimeldung aus der Ferne elektronisch erfolgen.

Ein derartiges System ist nach der Montage an eine Schiene (nicht abgebildet) bezüglich des Erfassungsbereichs für Metallteile bzw. des Erfassungsbereichs für das Erfassen der metallischen Räder von Schienenfahrzeugen zu justieren. Dies ist beispielsweise notwendig, um den Einfluss der Metallmasse der unterschiedlichen Schienentypen oder beispielsweise Toleranzen durch die Montage auszugleichen. Bezogen auf die Ausführungsform erfolgt die Justierung dadurch, dass eine einstellbare Impedanz 9 mittels einer Koppelspule 14 in den elektrischen Schwingkreis 4, insbesondere in die Sensorspule 12, magnetisch eingekoppelt wird. Dies führt zu einer magnetischen Kopplung der Koppelspule 14 und der Sensorspule 12. Anhand der verstellbaren Impedanz 9 kann die Güte des elektrischen Schwingkreises 4 verändert werden, wodurch der Erfassungsbereich für Metallteile verändert wird.

Auch ist es möglich, dass die Regelungselektronik 7 im regulären Betrieb ausgeschaltet ist. So wird die Regelungselektronik 7 nur für den Fall, dass ein Bestimmen der Güte des elektrischen Schwingkreises 4 bzw. eine Veränderung der Güte des elektrischen Schwingkreises 4, notwendig ist, eingeschaltet. Dies ist notwendig, da alle Bauteile physikalisch an dieselbe Zuleitung 1 angebunden sind.

Die Regelungselektronik 7 wird über ein hochfrequentes Signal, vorzugsweise eine hochfrequente Wechselspannung mit Energie versorgt. Dies geschieht durch einen Hochpassfilter 6, welcher an die Zuleitung 1 angeschaltet ist und auf seiner Ausgangsseite an die Regelungselektronik 7 geschaltet ist. Im Falle des Bestimmens der Güte bzw. des Veränderns der Güte des elektrischen Schwingkreises 4 wird die Regelungselektronik 7 durch das hochfrequente Signal, welches den Hochpassfilter 6 passieren kann, mit Energie versorgt und das Bestimmen der Güte bzw. das Verändern der Güte kann durchgeführt werden. Hierbei wird durch die Regelungselektronik 7 unter Benutzung der Regelungsleitungen 8 die Impedanz 9 entsprechend verstellt, wodurch die Güte des elektrischen Schwingkreises 4 und folglich der Erfassungsbereich für Metallteile bzw. der Erfassungsbereich für metallische Räder von Schienenfahrzeugen verändert wird.

### Bezugszeichenliste:

- 1: Zuleitung
- 2: Tiefpassfilter
- 3,3': Anbindungselektronik
- 4: elektrischer Schwingkreis
- 5: Signalleitung
- 6: Hochpassfilter
- 7: Regelungselektronik
- 8: Regelungsleitung
- 9: verstellbare Impedanz
- 10: Kopplung
- 11,11': Energieversorgungsleitung
- 12: Sensorspule
- 13: Sensorkapazität
- 14: Koppelspule

## Patentansprüche

1. Sensor zum Erfassen von Metallteilen, insbesondere von metallischen oder teilmetallischen Rädern von Schienenfahrzeugen,
mit einem eine Güte aufweisenden elektrischen Schwingkreis (4), welcher mindestens eine ein magnetisches Feld erzeugende Sensorspule (12) und mindestens eine Sensorkapazität (13) aufweist,
wobei eine einstellbare, vorzugsweise digitale Impedanz (9), welche magnetisch in den elektrischen Schwingkreis (4) eingekoppelt ist, wodurch die Güte des elektrischen Schwingkreises (4) einstellbar ist, wobei durch Einstellen der Güte des elektrischen Schwingkreises (4) der Erfassungsbereich des Sensors für Metallteile veränderbar ist; und
wobei eine Änderung einer Gleichspannung und/oder eines Gleichstromsdes elektrischen Schwingkreises (4) ein Erfassen von Metallteilen signalisiert.

2. Sensor nach Anspruch 1
**dadurch gekennzeichnet, dass**
die Impedanz (9) mittels einer Koppelspule (14) in den elektrischen Schwingkreis (4) eingekoppelt ist.

3. Sensor nach Anspruch 2,
**dadurch gekennzeichnet, dass**
die Impedanz (9) parallel und/oder seriell zur Koppelspule (14) geschaltet ist.

4. Sensor nach einem der vorangehenden Ansprüche,
**dadurch gekennzeichnet, dass**
der Sensor in einem Gehäuse verbaut ist, wobei das magnetische Feld der Sensorspule (12) derart dimensioniert ist, dass es aus dem Gehäuse hinausgeht.

5. System zum Erfassen von Metallteilen, insbesondere von metallischen oder teilmetallischen Rädern von Schienenfahrzeugen,
aufweisend:
mindestens einen Sensor nach einem der vorangehenden Ansprüche;
mindestens eine Regelungselektronik (7) zur Anpassung des Erfassungsbereichs des Sensors; und
mindestens eine Anbindungselektronik (3, 3') mit einer Impedanz mit einem Wert im Bereich von 1kΩ bis 100kΩ zur elektrischen Anbindung der Regelungselektronik (7) an eine Zuleitung (1), vorzugsweise eine Zweidrahtleitung.

6. System nach Anspruch 5,
**dadurch gekennzeichnet, dass**
ein auf die Zuleitung (1) aufgeprägtes, hochfrequentes Signal, beispielsweise eine hochfrequente Wechselspannung, die Regelungselektronik (7) mit elektrischer Energie versorgt, wobei das hochfrequente Signal vorzugsweise eine Frequenz größer als 100 kHz aufweist.

7. System nach Anspruch 6,
**dadurch gekennzeichnet, dass**
für die elektrische Energieversorgung mittels des auf der Zuleitung (1) aufgeprägtem, hochfrequentem Signal ein Hochpassfilter (6) vor die Regelungselektronik (7) geschaltet ist, wobei dieser eine Grenzfrequenz größer als 100 kHz aufweist.

8. System nach einem der Ansprüche 5 bis 7,
**gekennzeichnet, durch**
einen Tiefpassfilter (2), welcher den Sensor gemäß einem der Ansprüche 1 bis 4 mit der Zuleitung (1) verbindet, wobei der Tiefpassfilter (2) eine Grenzfrequenz von 200 Hz bis 200 kHz, vorzugsweise von 200 Hz bis 50 kHz, besonders bevorzugt 500 Hz bis 2 kHz aufweist.

9. System nach einem der Ansprüche 5 bis 8,
**dadurch gekennzeichnet, dass**
die Regelungselektronik (7) mittels mindestens einer Signalleitung (5) mit der Zuleitung (1) verbunden ist, wobei die Signalleitung (5) der Signalübertragung auf die Zuleitung (1) dient, beispielsweise mit einer Frequenz-Modulation.

10. System nach einem der Ansprüche 5 bis 9,
**dadurch gekennzeichnet, dass**
die Regelungselektronik (7) die für das Erfassen von Metallteilen nicht benötigte Bauteile der Regelungselektronik (7) abschaltet.

11. System nach Anspruch 10,
**dadurch gekennzeichnet, dass**
die abgeschalteten nicht benötigten Bauteile der Regelungselektronik (7) durch das hochfrequente Signal einschaltbar sind.

12. System nach einem der Ansprüche 5 bis 11,
**dadurch gekennzeichnet, dass**
die Regelungselektronik (7) eine Fernbedienungsfunktionalität und/oder ein Fernbedienungsmodul aufweist.

13. System nach einem der Ansprüche 5 bis 12,
**gekennzeichnet, durch**
zwei Sensoren nach einem der Ansprüche 1 bis 4, wobei durch diese die Bewegungsrichtung von detektierten Metallteilen und/oder die Anzahl der Metallteile feststellbar ist.

14. Verfahren zum Erfassen von Metallteilen, insbesondere von metallischen oder teilmetallischen Rädern von Schienenfahrzeugen, aufweisend die Schritte:
Bestimmen der Güte eines elektrischen Schwingkreises (4);
Verändern der Güte durch magnetische Einkopplung einer einstellbaren, vorzugsweise digitalen Impedanz (9) in den elektrischen Schwingkreis (4), wobei durch das Verändern der Güte der Erkennungsbereich eines Sensors für Metallteile geändert wird; und
Messen der Änderung der Gleichspannung und/oder des Gleichstroms des elektrischen Schwingkreises (4), wobei die Änderung der Gleichspannung und/oder des Gleichstroms ein Erfassen von Metallteilen signalisiert.

15. Verfahren nach Anspruch 14,
**dadurch gekennzeichnet, dass**
der Verfahrensschritt des Veränderns der Güte das Parallel- und/oder Seriell-Schalten der einstellbaren Impedanz (4) zu einer Koppelspule (14) umfasst.

16. Verfahren nach einem der Ansprüche 14 oder 15,
**dadurch gekennzeichnet, dass**
nach dem Verändern der Güte, wobei der Erkennungsbereich für Metallteile geändert wird, eine Regelungselektronik (7) teilweise oder vollständig abgeschaltet wird.

17. Verfahren nach Anspruch 16,
**dadurch gekennzeichnet, dass**
die Regelungselektronik (7) zum Bestimmen der Güte und Verändern der Güte eingeschaltet wird.

18. Computerlesbares Speichermedium, welches Instruktionen enthält, die mindestens das System nach Anspruch 5 dazu veranlassen, ein Verfahren nach einem der Ansprüche 14 bis 17 zu implementieren, wenn die Instruktionen durch das System nach Anspruch 5 ausgeführt werden.

## Claims

1. A sensor for detecting metal parts, particularly metallic or semi-metallic wheels of railway vehicles,
having a quality-exhibiting electrical oscillating circuit (4) which comprises at least one sensor coil (12) generating a magnetic field and at least one sensor capacitance (13),
wherein an adjustable, preferably digital impedance (9) is magnetically coupled into the electrical oscillating circuit (4), whereby the quality of the electrical oscillating circuit (4) is adjustable, wherein the detection range of the sensor for metal parts can be changed by adjusting the quality of the electrical oscillating circuit (4); and
wherein a change in a direct voltage and/or direct current of the electrical oscillating circuit (4) signals a detection of metal parts.

2. The sensor according to claim 1,
**characterized in that**
the impedance (9) is coupled into the electrical oscillating circuit (4) by means of a coupling coil (14).

3. The sensor according to claim 2,
**characterized in that**
the impedance (9) is connected in parallel and/or in series to the coupling coil (14).

4. The sensor according to one of the preceding claims,
**characterized in that**
the sensor is installed in a housing, wherein the magnetic field of the sensor coil (12) is dimensioned such that it extends beyond the housing.

5. A system for detecting metal parts, particularly metallic or semi-metallic wheels of railway vehicles,
comprising:
at least one sensor according to one of the preceding claims;
at least one control electronics (7) for adjusting the detection range of the sensor; and
at least one connection electronics (3, 3') having an impedance with a value in the range of from 1kΩ to 100kΩ for electrically connecting the control electronics (7) to a lead (1), preferably a two-wire line.

6. The system according to claim 5,
**characterized in that**
a high-frequency signal impressed on the lead (1), for example a high-frequency alternating voltage, supplies the control electronics (7) with electrical energy, wherein the high-frequency signal preferably has a frequency greater than 100 kHz.

7. The system according to claim 6,
**characterized in that**
a high-pass filter (6) is connected upstream of the control electronics (7), wherein same has a cutoff frequency greater than 100 kHz, for the supplying of electrical energy by means of the high-frequency signal impressed on the lead (1).

8. The system according to one of claims 5 to 7,
**characterized by**
a low-pass filter (2) which connects the sensor according to one of claims 1 to 4 with the lead (1), wherein the low-pass filter (2) has a cutoff frequency of 200 Hz to 200 kHz, preferably 200 Hz to 50 kHz, particularly preferentially 500 Hz to 2 kHz.

9. The system according to one of claims 5 to 8,
**characterized in that**
the control electronics (7) is connected to the lead (1) by means of at least one signal line (5), wherein the signal line (5) serves the signal transmission to the lead (1), for example via frequency modulation.

10. The system according to one of claims 5 to 9,
**characterized in that**
the control electronics (7) deactivates the components of the control electronics (7) which are not needed in the detecting of metal parts.

11. The system according to claim 10,
**characterized in that**
the deactivated unneeded components of the control electronics (7) can be activated by the high-frequency signal.

12. The system according to one of claims 5 to 11,
**characterized in that**
the control electronics (7) exhibits a remote control functionality and/or a remote control module.

13. The system according to one of claims 5 to 12,
**characterized by**
two sensors according to one of claims 1 to 4, wherein same are able to identify the direction of movement of detected metal parts and/or the number of metal parts.

14. A method for detecting metal parts, particularly metallic or semi-metallic wheels of railway vehicles, comprising the steps:
Determining the quality of an electrical oscillating circuit (4);
Changing the quality by magnetically coupling an adjustable, preferably digital impedance (9) into the electrical oscillating circuit (4), wherein the detection range of a sensor for metal parts is changed by the changing of the quality; and
Measuring the change in the direct voltage and/or direct current of the electrical oscillating circuit (4), wherein the change in direct voltage and/or direct current signals a detection of metal parts.

15. The method according to claim 14,
**characterized in that**
the method step of changing the quality comprises connecting the adjustable impedance (4) in parallel and/or series to a coupling coil (14).

16. The method according to one of claims 14 or 15,
**characterized in that**
after the quality has been changed, wherein the detection range for metal parts is changed, a control electronics (7) is partially or completely deactivated.

17. The method according to claim 16,
**characterized in that**
the control electronics (7) for determining the quality and changing the quality is activated.

18. A computer-readable storage medium containing instructions which prompts at least the system according to claim 5 to implement a method according to one of claims 14 to 17 upon the system according to claim 5 executing the instructions.

## Revendications

1. Détecteur pour la détection de pièces métalliques, en particulier de roues métalliques ou partiellement métalliques de véhicules ferroviaires, comprenant un circuit oscillant électrique (4) qui présente une qualité et qui comporte au moins une bobine de détecteur (12) générant un champ magnétique et au moins un condensateur de détecteur (13),
dans lequel
une impédance réglable, de préférence numérique (9), est couplée par voie magnétique au circuit oscillant électrique (4) et permet de régler la qualité du circuit oscillant électrique (4),
le réglage de la qualité du circuit oscillant électrique (4) permet de modifier la plage de détection du détecteur à l'égard de pièces métalliques ; et
une modification d'une tension continue et/ou d'un courant continu du circuit électrique oscillant (4) signalise une détection de pièces métalliques.

2. Détecteur selon la revendication 1,
**caractérisé en ce que**
l'impédance (9) est couplée dans le circuit oscillant électrique (4) au moyen d'une bobine de couplage (14).

3. Détecteur selon la revendication 2,
**caractérisé en ce que**
l'impédance (9) est connectée en parallèle et/ou en série avec la bobine de couplage (14).

4. Détecteur selon l'une des revendications précédentes,
**caractérisé en ce que**
le détecteur est installé dans un boîtier, le champ magnétique de la bobine de détecteur (12) étant dimensionné de manière à sortir hors du boîtier.

5. Système de détection de pièces métalliques, en particulier de roues métalliques ou partiellement métalliques de véhicules ferroviaires, comprenant :
au moins un détecteur selon l'une des revendications précédentes ;
au moins une électronique de régulation (7) pour adapter la plage de détection du détecteur ; et
au moins une électronique de connexion (3, 3') ayant une impédance d'une valeur dans la plage de 1 KΩ à 100 KΩ pour connecter électriquement l'électronique de régulation (7) à une ligne d'alimentation (1), de préférence à une ligne à deux fils.

6. Système selon la revendication 5,
**caractérisé en ce que**
un signal haute fréquence, par exemple une tension alternative haute fréquence, appliqué à la ligne d'alimentation (1) alimente l'électronique de régulation (7) en énergie électrique, le signal haute fréquence ayant de préférence une fréquence supérieure à 100 kHz.

7. Système selon la revendication 6,
**caractérisé en ce que**
pour l'alimentation en énergie électrique au moyen du signal haute fréquence appliqué à la ligne d'alimentation (1), un filtre passe-haut (6) est branché en amont de l'électronique de régulation (7), ledit filtre ayant une fréquence de coupure supérieure à 100 kHz.

8. Système selon l'une des revendications 5 à 7,
**caractérisé par**
un filtre passe-bas (2) qui relie le détecteur selon l'une des revendications 1 à 4 à la ligne d'alimentation (1), le filtre passe-bas (2) ayant une fréquence de coupure de 200 Hz à 200 kHz, de préférence de 200 Hz à 50 kHz, de manière particulièrement préférée de 500 Hz à 2 kHz.

9. Système selon l'une des revendications 5 à 8,
**caractérisé en ce que**
l'électronique de régulation (7) est reliée à la ligne d'alimentation (1) au moyen d'au moins une ligne de signal (5), la ligne de signal (5) servant à transmettre des signaux à la ligne d'alimentation (1), par exemple avec une modulation de fréquence.

10. Système selon l'une des revendications 5 à 9,
**caractérisé en ce que**
l'électronique de régulation (7) coupe les composants de l'électronique de régulation (7) qui ne sont pas nécessaires à la détection de pièces métalliques.

11. Système selon la revendication 10,
**caractérisé en ce que**
les composants coupés non nécessaires de l'électronique de régulation (7) peuvent être mis en service par le signal haute fréquence.

12. Système selon l'une des revendications 5 à 11,
**caractérisé en ce que**
l'électronique de régulation (7) inclut une fonctionnalité de télécommande et/ou un module de télécommande.

13. Système selon l'une des revendications 5 à 12,
**caractérisé par**
deux détecteurs selon l'une des revendications 1 à 4 permettant de déterminer la direction du mouvement des pièces métalliques détectées et/ou le nombre de pièces métalliques.

14. Procédé de détection de pièces métalliques, en particulier de roues métalliques ou partiellement métalliques de véhicules ferroviaires, comprenant les étapes consistant à :
déterminer la qualité d'un circuit oscillant électrique (4) ;
modifier la qualité par couplage magnétique d'une impédance réglable, de préférence numérique (9), dans le circuit oscillant électrique (4), la plage de reconnaissance d'un détecteur à l'égard de pièces métalliques étant modifiée par la modification de la qualité ; et
mesurer la modification de la tension continue et/ou du courant continu du circuit oscillant électrique (4), la modification de la tension continue et/ou du courant continu signalisant une détection de pièces métalliques.

15. Procédé selon la revendication 14,
**caractérisé en ce que**
l'étape consistant à modifier la qualité inclut la connexion de l'impédance réglable (4) en parallèle et/ou en série à une bobine de couplage (14).

16. Procédé selon l'une des revendications 14 ou 15,
**caractérisé en ce que**
après avoir modifié la qualité en modifiant la plage de reconnaissance à l'égard de pièces métalliques, une électronique de régulation (7) est coupée partiellement ou complètement.

17. Procédé selon la revendication 16,
**caractérisé en ce que**
l'électronique de régulation (7) est mise en service pour déterminer la qualité et pour modifier la qualité.

18. Support de stockage lisible par ordinateur contenant des instructions qui incitent au moins le système selon la revendication 5 à mettre en oeuvre un procédé selon l'une des revendications 14 à 17, lorsque les instructions sont exécutées par le système selon la revendication 5.
